# FASCICULE DE BREVET EUROPEEN

(11) **EP 3 320 129 B1**
(45) Date de publication et mention de la délivrance du brevet: **29.03.2023**
(21) Numéro de dépôt: 16741893.8
(22) Date de dépôt: 08.07.2016
(51) Int. Cl.: B22F 1/145, C23G 5/00, B22F 10/34, B22F 12/10, B22F 12/70

(54) **MACHINE DE FABRICATION ADDITIVE CONTENANT UN DISPOSITIF METTANT EN OEUVRE IN-SITU UN PROCÉDÉ PERMETTANT DE RETIRER LES OXYDES PRÉSENTS À LA SURFACE DES NODULES D'UNE POUDRE MÉTALLIQUE AVANT L'UTILISATION DE CELLE-CI DANS LA FABRICATION ADDITIVE PAR FUSION**
MASCHINE ZUR ADDITIVEN FERTIGUNG, DIE EINE VORRICHTUNG ENTHÄLT, DIE IN-SITU EIN VERFAHREN ZUR ENTFERNUNG VON OXIDEN AUF DER OBERFLÄCHE DER KNÖTCHEN EINES METALLPULVERS VOR DER VERWENDUNG DES PULVERS IN DER ADDITIVEN FERTIGUNG MITTELS FUSION
ADDITIVE MANUFACTURING MACHINE CONTAINING A DEVICE IMPLEMENTING IN-SITU A PROCESS FOR REMOVING THE OXIDES PRESENT ON THE SURFACE OF THE NODULES OF A METAL POWDER BEFORE ITS USE IN ADDITIVE MANUFACTURING BY FUSION

(30) Priorité: 10.07.2015 FR 1556635
(43) Date de publication de la demande: 16.05.2018
(73) Titulaire: AddUp, 63118 Cébazat (FR)
(72) Inventeur: MAZET, Thierry, 54000 Nancy (FR)
(74) Mandataire: Barascou, Frédéric
(86) Numéro de dépôt international: PCT/EP2016/066363
(87) Numéro de publication internationale: WO 2017/009264

(56) Documents cités:
- EP-A1- 0 219 230
- WO-A1-92/01825
- WO-A1-2015/023439
- CN-A- 1 074 842
- FR-A- 1 190 669
- FR-A- 1 472 777
- FR-A1- 2 260 405
- FR-A1- 2 727 322
- US-A- 4 508 563

## Description

La présente invention est relative à une machine de fabrication additive contenant un dispositif mettant en oeuvre in-situ un procédé permettant de retirer la couche d'oxydes recouvrant les nodules d'une poudre métallique, ou les points d'oxydes présents à la surface desdits nodules. Le procédé est mis en oeuvre préalablement à l'utilisation de la poudre métallique dans la fabrication additive par fusion de poudre, pour lequel la présence d'oxydes à la surface des nodules constitue un obstacle au bon déroulé du procédé industriel et peut dégrader la qualité de la pièce. Le procédé s'applique tout particulièrement aux poudres métalliques de métaux avides d'oxygène, tels que l'aluminium, le titane, le zirconium, le chrome, le niobium, le tantale, le molybdène et leurs alliages et de façon plus générale ceux dont l'élaboration ne passe pas par la voie liquide.

La poudre métallique peut être composée de nodules ayant tous la même composition, ou d'un mélange de nodules ayant au moins deux compositions différentes. Par exemple, il peut s'agir d'une poudre de nodules en aluminium ou d'un mélange de nodules en aluminium et de nodules en nickel.

Certains métaux, comme l'aluminium, sont très avides d'oxygène. A l'air libre, leur surface se recouvre instantanément d'une pellicule d'oxydes qui lors d'opérations d'assemblage, nécessitant l'adhésion des nodules les uns aux autres ou leur fusion, nuit à la qualité de la liaison. La dite couche peut alors être suffisamment résistante pour maintenir dans sa gangue d'oxyde la phase liquide formée lors de ces opérations. L'élaboration de la poudre métallique peut être réalisée sous un vide partiel ou sous une atmosphère inerte, de sorte d'éviter et/ou limiter la présence d'espèces oxydantes à proximité du matériau en particulier lorsqu'il est porté à haute température. Cependant, il est en pratique quasiment impossible de conserver cette poudre métallique dans un état de non oxydation, en particulier lorsque le procédé industriel mettant en oeuvre ladite poudre est pratiqué sous air. Ainsi, la poudre métallique de ces métaux est généralement oxydée lors de son utilisation. On connaît par exemple du document WO 2015/023439 un exemple de procédé et de dispositif pour retirer une couche d'oxyde recouvrant les nodules d'une poudre métallique.

La présente invention permet de pallier ce problème en permettant de retirer la couche d'oxydes recouvrant les nodules d'une poudre métallique, ou les points d'oxydes présents à la surface desdits nodules, au moment de leur utilisation dans un procédé industriel, permettant ainsi d'obtenir des pièces ayant de hautes caractéristiques mécaniques et/ou des propriétés renforcées et exemptes de traces d'oxydes. L'invention consiste notamment en une machine de fabrication additive contenant un dispositif mettant en oeuvre in-situ un procédé permettant de retirer les oxydes présents à la surface de nodules d'une poudre métallique avant l'utilisation de celle-ci dans la fabrication additive par fusion de la poudre métallique consistant à décaper ladite poudre métallique en mettant celle-ci en contact avec de la vapeur obtenue par sublimation d'un matériau solide décapant et/ou par sublimation d'un matériau solide décapant suivie d'une transformation chimique. Dans la technique, le matériau solide décapant est généralement appelé « flux ».

Le matériau solide décapant, ou flux, est chauffé pour être sublimé, il peut ensuite subir une transformation chimique, par exemple la décomposition de la molécule initial du flux en d'autres molécules distinctes. Dans ce qui suit, on désignera indifféremment par « matériau solide décapant sublimé » ou « vapeur de matériau solide décapant » le produit résultant de la sublimation du matériau solide décapant et/ou le produit résultant de la sublimation du matériau solide décapant suivie d'une transformation chimique.

Selon un exemple de réalisation de l'invention, le matériau solide décapant est un halogénure, par exemple du NH₄F. A la pression atmosphérique, il est porté à une température d'environ 200°C pour obtenir sa sublimation. La transformation chimique du NH₄F peut par exemple conduire à la formation de AIF et de AlF₃. Selon un autre exemple de réalisation de l'invention, le matériau solide décapant est du K₃AlF₆-KAlF₄ porté à une température d'environ 400°C à la pression atmosphérique pour obtenir sa sublimation. Ces deux exemples de matériaux solides décapants ou flux sont notamment adaptés pour le décapage de l'aluminium. La température de sublimation est réduite lorsque l'enceinte dans laquelle est placé le flux est placée sous une pression inférieure à la pression atmosphérique.

Avantageusement, la vapeur obtenue par sublimation d'un matériau solide décapant et/ou par sublimation d'un matériau solide décapant suivie d'une transformation chimique est entrainée par un gaz porteur, par exemple de l'argon. L'utilisation d'un gaz porteur permet de disposer d'un débit total gaz porteur plus vapeur de matériau solide décapant, plus important et donc plus facile à réguler en débit et pression. Selon un exemple de réalisation de l'invention, le gaz porteur circulant entre les nodules de la poudre métallique et ladite poudre métallique constituent un lit fluidisé. Le dispositif compris dans la machine de fabrication additive comprend un contenant dans lequel est placé le matériau solide décapant, un moyen apportant les calories permettant de sublimer le matériau solide décapant, et un moyen permettant le contact entre la vapeur obtenue par sublimation d'un matériau solide décapant et/ou par sublimation d'un matériau solide décapant suivie d'une transformation chimique et la poudre métallique.

Le moyen permettant le contact entre la vapeur de matériau solide décapant et la poudre métallique peut simplement reposer sur la proximité des nodules de matériau solide décapant avec les nodules de la poudre métallique.

Le moyen permettant le contact entre la vapeur de matériau solide décapant et la poudre métallique peut également être une trémie sur laquelle repose la poudre métallique, ladite trémie étant traversée par de la vapeur de matériau solide décapant. Le moyen permettant le contact entre la vapeur de matériau solide décapant et la poudre métallique peut-être la tombée d'une pluie de poudre métallique dans une courant ascendant de vapeur de matériau solide décapant.

Selon un exemple de réalisation de l'invention, le dispositif comprend un premier contenant dans lequel est placé le matériau solide décapant, un moyen permettant de sublimer ledit matériau solide décapant, un dispositif conduisant la vapeur de matériau solide décapant vers un second contenant dans lequel est placée la poudre métallique. Lesdits contenants peuvent ne constituer qu'un seul contenant ayant au moins deux compartiments, un premier compartiment où se trouve le matériau solide décapant et un second compartiment où se trouve la poudre métallique.

Selon un mode de réalisation, le dispositif comprend des moyens permettant d'obtenir un lit fluidisé dans le contenant où se trouve la poudre métallique par l'écoulement de la vapeur de matériau solide décapant entre les nodules de la poudre métallique.

Le dispositif comprend un moyen pour collecter les gaz en sortie du contenant où la poudre métallique est décapée afin d'en assurer le confinement et/ou le traitement pour neutraliser les composants polluants desdits gaz.

Les caractéristiques et avantages de l'invention apparaitront à la lecture de la description qui va suivre, donnée uniquement à titre d'exemple, et non limitative, en référence aux figures annexées suivantes :
- Figure 1 : représentation schématique d'un premier exemple de dispositif compris dans l'invention,
- Figure 2 : représentation schématique d'un second exemple de dispositif compris dans l'invention, et,
- Figure 3 : représentation schématique d'un troisième exemple de dispositif compris dans l'invention.

Pour simplifier la description, nous considérerons ci-après que la poudre métallique à préparer en vue de son utilisation dans un procédé industriel est constituée de nodules ayant la même composition. Néanmoins, l'invention s'applique également à de la poudre métallique ayant des nodules de composition et/ou de dimensions différentes.

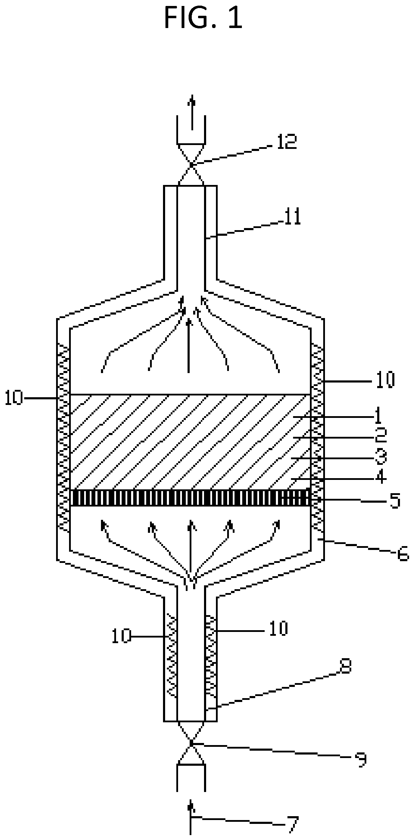

On peut voir représenté en Fig. 1, un premier mode de réalisation d'un dispositif compris dans l'invention. Un mélange, composé de nodules 1 d'une poudre métallique 2 à préparer en vue de son utilisation dans un procédé industriel et de nodules 3 de matériau solide décapant 4 pour ladite poudre métallique, est placé sur une trémie 5 située dans un contenant 6. La proportion entre les nodules 1 de poudre métallique 2 et les nodules 3 de matériau solide décapant 4 est déterminée selon la nature de la poudre métallique et du matériau solide décapant, la quantité d'oxydes présents à la surface des nodules 1 de la poudre métallique 2 et des conditions de mise en oeuvre du procédé permettant de retirer la couche d'oxydes recouvrant les nodules d'une poudre métallique.

Le mélange entre les nodules 1 de poudre métallique 2 et les nodules 3 de matériau solide décapant 4 est réalisé de telle sorte que les nodules 3 de matériau solide décapant 4 soient dispersés dans la poudre métallique 2. La quantité de matériau solide décapant 4 est déterminée selon la taille des nodules 1 de poudre métallique et selon la facilité à laquelle les nodules 3 de matériau solide décapant passeront en phase vapeur lors de la mise en oeuvre du procédé. Il importe en effet que de la vapeur de matériau solide décapant 4 vienne en contact avec l'ensemble de la surface de chacun des nodules 1 de poudre métallique 2.

Un gaz porteur 7, par exemple de l'argon, est injecté sous la trémie 5 par un conduit d'alimentation 8 comprenant un organe 9 d'isolement et de régulation du débit de gaz porteur.

Un moyen 10 permet de porter le mélange composé des nodules 1 de poudre métallique 2 et des nodules 3 de matériau solide décapant 4 à la température nécessaire au procédé. Il permet d'apporter les calories permettant d'amener le matériau solide décapant à la température requise pour obtenir sa gazéification et ensuite porter les vapeurs de matériau solide décapant 4 obtenues à la température souhaitée pour interagir avec la poudre métallique 2. Ce moyen 10 peut, par exemple, être placé sur les parois extérieures du contenant 6, et/ou à l'intérieur du contenant 6 sous la trémie 5, et/ou sur le conduit d'alimentation. Le moyen 10 peut également être une combinaison de moyens placés en différents endroits. Il peut par exemple s'agir d'une ou plusieurs résistances électriques. Le contenant 6 et le conduit d'alimentation 8 sont isolés thermiquement pour éviter les déperditions thermiques et éviter tout risque de brûlure pour les opérateurs. Avantageusement, le gaz porteur 7 est chauffé avant qu'il ne rentre en contact avec le mélange de nodules 1 de poudre métallique 2 et les nodules 3 de matériau solide décapant 4.

Le débit et la pression d'alimentation du gaz porteur 7 sont ajustés selon la quantité et la hauteur du mélange de matériau solide décapant 4 et de poudre métallique 2 à traiter de façon à assurer la sustentation de la poudre métallique.

La trémie 5 a des caractéristiques qui permettent l'écoulement gazeux au travers de son épaisseur, tout en maintenant le matériau solide décapant 4 et la poudre métallique 2 sur le dessus de sa face supérieure. Sa perte de charge permet d'assurer une bonne répartition de l'écoulement du gaz porteur 7 sur l'ensemble de sa face inférieure.

En circulant autour des nodules 3 de matériau solide décapant 4, le gaz porteur 7 facilite le transport du matériau solide décapant 4 au travers de la phase métallique. Celui-ci passe directement de l'état solide à l'état gazeux, sans passer par un état liquide intermédiaire. Le matériau solide décapant 4 est ainsi sublimé.

Le contact intime entre le mélange gazeux et la poudre métallique 2 permet de décaper la surface des nodules 1 métallique en supprimant toute trace d'oxydes présents à la surface desdits nodules 1. Ces oxydes se décomposent en gaz entrainés par le gaz porteur et le solde de vapeur de matériau solide décapant sublimé.

En partie supérieure du contenant 6, on trouve un conduit 11, équipé d'un organe d'isolement 12, par lequel s'échappent le mélange gazeux constitué du gaz porteur 7, des produits de la réaction entre les vapeurs issues de la sublimation du matériau solide décapant et les oxydes présents à la surface des nodules 1, ainsi que des vapeurs issues de la sublimation matériau solide décapant excédentaires n'ayant pas réagi avec les oxydes métalliques. Le conduit 11 est raccordé à un moyen de collecte et de refroidissement de ces gaz, non représenté sur la Fig. 1. Un moyen de traitement des gaz collectés en sortie du contenant 6 peut être implanté en aval du conduit 11 de sorte de rejeter directement ces gaz après dépollution. Ce moyen de traitement des gaz peut être déporté. Dans ce cas, les gaz collectés en sortie du contenant 6 sont encapsulés pour leur traitement ultérieur.

Avantageusement, l'écoulement du gaz porteur 7 entre les nodules 1 et 3 conduit à la formation d'un lit fluidisé.

Les parois internes du contenant 6 et la trémie 5 sont constituées, ou recouvertes, d'un matériau compatible avec le matériau solide décapant 4 et/ou gazeux, et avec le niveau de température auquel ces équipements sont portés lors de la réalisation du procédé.

Une fois l'opération terminée, l'ensemble est refroidi et le contenant 6 est isolé au moyen des organes 9 et 12. Ce contenant 6 pourra être utilisé par la suite pour l'alimentation de la machine qui exploitera la poudre métallique 2 dans un procédé industriel. Selon une variante, le contenant 6 est ensuite placé dans une enceinte sous une atmosphère non oxydante dans laquelle est réalisé un transvasement de la poudre métallique vers un contenant qui sera obturé de manière étanche après remplissage et utilisé par la suite pour l'alimentation de la machine qui exploitera la poudre métallique dans un procédé industriel.

Evidemment, comme la poudre métallique 2 est très avide d'oxygène, il est impératif que celle-ci soit maintenue sous une atmosphère non oxydante entre la fin du procédé et son utilisation pour un procédé industriel pour lequel la surface des nodules 1 de poudre métallique 2 doit être exempte d'oxydes.

Le mélange entre le matériau solide décapant 4 et la poudre métallique 2 peut être réalisé juste avant le dépôt de celui-ci sur la trémie 5 du dispositif mettant en oeuvre le procédé permettant de retirer la couche d'oxydes recouvrant les nodules d'une poudre métallique. Il peut également être réalisé en amont, le mélange étant préparé en atelier et livré prêt à l'emploi. De la poudre de matériau solide décapant 4 et de la poudre métallique 2 peuvent, par exemple, être mélangées avant que l'ensemble soit broyé dans un broyeur haute énergie ou planétaire ou dans un broyeur à attrition, de sorte d'obtenir un mélange intime entre les deux composants.

Selon une variante de réalisation, le matériau solide décapant 4 ne se présente pas sous la forme de nodule mais recouvre la surface des nodules 1 de la poudre métallique 2. Dans ce cas, seule la poudre métallique 2 préalablement enrobée de matériau solide décapant 4 est placée sur la trémie 5 du dispositif.

En variante de réalisation de l'invention, le matériau solide décapant 4 n'est pas mélangé à la poudre métallique 2. Le matériau solide décapant 4 est d'abord déposé dans la trémie 5 et séparé de la poudre métallique 2 par un tamis permettant le passage du gaz porteur et des vapeurs obtenues par sublimation du matériau solide décapant sans pour autant permettre à la poudre métallique 2 de venir en contact avec les nodules 3 de matériau solide décapant 4.

Selon une autre variante de réalisation de l'invention, on n'utilise pas de gaz porteur 7. Dans ce cas, le matériau solide décapant 4 et la poudre métallique reposent au fond du contenant 6, la trémie 5 n'étant plus nécessaire. Dans ce cas, la vapeur obtenue par sublimation du matériau solide décapant 4 remonte naturellement à travers la poudre métallique 2.

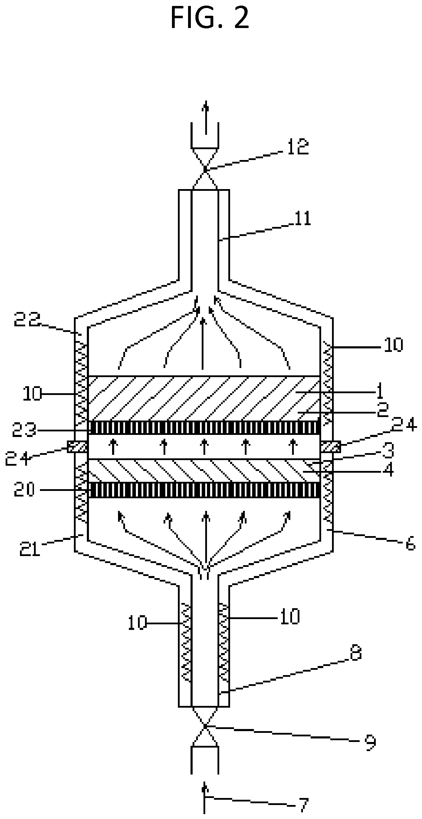

On peut voir représenté en Fig. 2, un second exemple de réalisation de dispositif. Du matériau solide décapant 4 est placé au-dessus d'une trémie 20 dans la partie inférieure 21 d'un contenant 6. Le matériau solide décapant 4 prend par exemple la forme d'une poudre ou de morceaux de plus grosses dimensions. Le contenant 6 est alimenté en sa partie inférieure avec un gaz porteur 7, par exemple de l'argon. La trémie 20 assure le support du matériau solide décapant 4 et la distribution du gaz porteur 7 sur l'ensemble de la section du contenant 6.

Dans la partie supérieure 22 du contenant 6, de la poudre métallique 2 est placée au-dessus d'une seconde trémie 23. Un moyen 24 permet d'assurer la liaison mécanique entre les deux parties 21 et 22 du contenant 6 et l'étanchéité de celle-ci.

Un moyen de chauffage 10 permet d'apporter les calories nécessaires pour amener le matériau solide décapant 4 à la température requise pour obtenir sa gazéification et ensuite porter les vapeurs obtenues par sublimation du matériau solide décapant à la température souhaitée pour interagir avec la poudre métallique.

Après avoir traversé la première trémie 20, le gaz porteur 7 se mélange à la vapeur obtenue par sublimation du matériau solide décapant 4. Le mélange gazeux ainsi constitué d'une portion de gaz porteur 7 et d'une portion de matériau solide décapant 4 sublimé traverse ensuite la seconde trémie 23 sur laquelle est placée la poudre métallique 2. Avantageusement, la circulation de ce mélange gazeux entre les nodules 1 de la poudre métallique 2 forme un lit fluidisé.

Les deux trémies 20 et 23 sont de nature à permettre l'écoulement gazeux au travers de leur épaisseur, tout en maintenant le matériau solide décapant 4 pour la trémie 20 et la poudre métallique 2 pour la trémie 23. Leur perte de charge permet d'assurer une bonne répartition de l'écoulement gazeux sur l'ensemble de leur section.

Le gaz porteur 7 est alimenté à une pression suffisante pour circuler entre l'entrée et la sortie du contenant 6 malgré la perte de charge résultant des trémies 20 et 23, du matériau solide décapant 4 et de la poudre métallique 2. Un organe de réglage 9 permet de réguler le débit de gaz porteur 7.

En partie supérieure du contenant 6, on trouve une sortie 11 par laquelle s'échappent le mélange gazeux constitué du gaz porteur 7, des produits de la réaction entre le matériau solide décapant sublimé et les oxydes présents à la surface des nodules 1, ainsi que matériau solide décapant sublimé excédentaire qui n'a pas réagi avec les oxydes métalliques.

Selon une variante de réalisation de l'invention, on n'utilise pas de gaz porteur 7. Dans ce cas, le matériau solide décapant 4 repose au fond du contenant 6, la trémie 20 n'étant plus nécessaire. Seule la vapeur obtenue par sublimation du matériau solide décapant traverse naturellement la trémie 23 sur laquelle repose la poudre métallique 2.

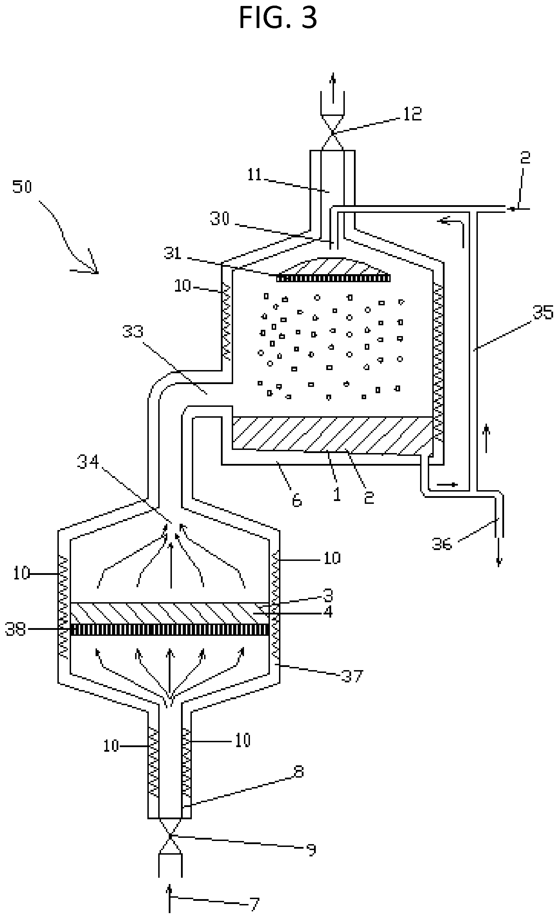

On peut voir représenté en Fig. 3, un troisième mode de réalisation du dispositif. La poudre métallique 2 est déversée en continu par un injecteur 30 sur une trémie 31 placée en partie supérieure d'un contenant 37. Contrairement aux trémies 5, 20, 23 décrites dans les exemples de réalisation précédents, la trémie 31 permet de laisser passer de la poudre métallique 2. Cette trémie 31 se comporte un peu comme un pommeau de douche. La poudre métallique tombe de la trémie 31 sous la forme d'une pluie de nodules 1 et vient se déposer sur le fond du contenant 6. En partie basse du contenant 6, se trouve au moins un point 33 d'injection d'un mélange 34 de vapeurs obtenues par sublimation du matériau solide décapant et d'un gaz porteur 7. Ce mélange 34 s'écoule dans le contenant 37 sensiblement de bas en haut avant de sortir par un orifice 11 placé en partie supérieure du contenant 37. Les nodules métalliques 1 sont ainsi placés dans un courant gazeux comprenant la vapeur de flux 4, laquelle vient supprimer les oxydes présents à la surface des nodules 1 de la poudre métallique 2. La hauteur du contenant 37 et la vitesse d'écoulement du mélange 34 dans ledit contenant 37 sont déterminées pour que la durée de la chute d'un nodule métallique 1 dans le contenant 37 soit suffisante pour que les vapeurs obtenues par sublimation du matériau solide décapant 4 suppriment toute trace d'oxyde à la surface dudit nodule. Le mélange 34 provient d'un contenant 37 dans lequel du matériau solide décapant 4, posé sur une trémie 38 traversée par un débit de gaz porteur 7, est sublimé par l'apport en calories d'un moyen de chauffage 10.

Dans les modes de réalisation de l'invention décrits précédemment, l'atmosphère présente dans le dispositif est avantageusement rendue non oxydante avant le début de la mise en oeuvre du procédé, par exemple par la mise sous vide partiel ou par un balayage d'une durée suffisante par un gaz inerte ou par action commune.

Le procédé est directement mis en oeuvre dans la machine dans laquelle est réalisé le procédé industriel utilisant la poudre métallique 2.

Le procédé est mis en oeuvre dans une machine de fabrication additive. Ladite machine peut être alimentée en contenants étanches contenant de la poudre préalablement activée. Elle contient un dispositif 50 pour réaliser in-situ l'activation de la poudre selon le procédé.

De nombreux développements ont été réalisés ces dernières années pour la fabrication additive de pièces en 3 dimensions à partir d'une poudre métallique, ou d'un mélange de poudres métalliques. Ce mode de fabrication consiste à fondre des couches successives de poudre au-dessus de celles préalablement ajoutées, fusionnées et solidifiées. Selon des variantes de réalisation, la poudre est soit déposée sous forme d'une couche au-dessus d'un lit de poudre contenant les premières strates de la pièce déjà fusionnée et solidifiée avant d'être fondue, par exemple selon les procédés de fusion sélective par laser ou par faisceau d'électrons, soit déjà fondue lorsqu'elle se dépose sur le substrat, par exemple selon le procédé de fabrication directe par laser ou faisceau d'électrons. Dans ce cas, la poudre métallique est injectée dans une buse pour former un jet homogène, lequel traverse par exemple un faisceau laser qui va fondre la poudre avant son dépôt sur le substrat.

Cependant, la fabrication additive de pièce en matériaux très avides d'oxygène, comme par exemple l'aluminium et certains de ces alliages peu chargés en éléments d'alliage, est très difficile du fait de la couche d'oxydes qui recouvre la surface des nodules de la poudre métallique. L'invention permet de pallier ce problème en permettant l'utilisation de poudres métalliques non recouvertes de couche d'oxydes.

Pour une machine de fabrication additive, la poudre métallique peut être traitée soit avant le dépôt de la première couche de poudre sur le plateau de travail, soit pendant et/ou après le dépôt de chaque couche de poudre. Dans le cas où le décapage de la poudre métallique est réalisé pendant et/ou après le dépôt de chaque couche de poudre, le plateau sur lequel est réalisée la pièce constitue la trémie 5, 23 selon les modes de réalisation représentés en Fig. 1 et Fig. 2. Réaliser cette opération pendant ou après le dépôt de la couche de poudre métallique nécessite que le balayage du flux gazeux n'entraine pas de déplacement excessif de poudre à la surface de la couche déposée qui soit susceptible de nuire à la régularité de la surface et de l'épaisseur de la couche. Pour éviter cette difficulté, il peut être avantageux de réaliser la mise en contact de la poudre métallique 2 avec la vapeur de flux 4 avant le dépôt de la couche.

Cette opération de décapage de la poudre métallique peut être réalisée en une seule opération pour l'ensemble de la poudre métallique nécessaire pour la production d'une pièce, par portions de la quantité totale de poudre traitées successivement l'une après l'autre, ou par portions de la quantité totale de poudre traitées en continu. Dans ces 2 derniers cas, le balayage de la poudre métallique par le débit gazeux est réalisé dans un contenant de poudre métallique de volume restreint placé au plus près de la zone de travail et en aval d'un contenant de poudre métallique de plus grande dimension, dans le sens d'écoulement de la poudre métallique. Le traitement dans ce contenant d'un volume restreint peut faciliter le balayage de la poudre métallique par le matériau solide décapant sublimé.

Selon un exemple illustratif de réalisation selon la Fig. 2, pour le traitement d'une poudre métallique 2 en aluminium Al3003. La surface intérieure du contenant 21 est revêtue d'aluminium et les trémies 20 et 23 sont en alliage d'aluminium. Le gaz porteur 7 est de l'argon, le flux 4 est du NH₄F. L'argon est porté à une température de 200°C en amont de la trémie 20. Le matériau solide décapant est également porté à une température de 200°C pour obtenir sa sublimation. Le matériau solide décapant sublimé réagit alors avec les parois de la trémie pour former du AIF et du AlF₃, ce dernier étant le plus stable.

Le matériau solide décapant sublimé réagit avec les oxydes d'aluminium Al₂O₃, situés à la surface des nodules métalliques selon la réaction 2NH₄F → N₂+4H₂+F₂ ; 3F₂ + Al₂O₃ → ½O₂ +2AlF₃.

La poudre métallique est également maintenue à une température d'environ 200°C. Cette température relativement basse permet d'éviter tout risque que les nodules d'aluminium débarrassés de leur couche d'alumine ne collent entre eux.

Les effluents gazeux collectés à la sortie 26 de l'enceinte 6 sont traités avec de la chaux pour neutraliser les fluorures.

## Revendications

1. Machine de fabrication additive **caractérisée en ce qu'**elle contient un dispositif (50) mettant en oeuvre in-situ un procédé permettant de retirer les oxydes présents à la surface de nodules (1) d'une poudre métallique (2) avant l'utilisation de celle-ci dans la fabrication additive par fusion de la poudre métallique (2), consistant à décaper ladite poudre métallique en mettant celle-ci en contact avec de la vapeur obtenue par sublimation d'un matériau solide décapant et/ou par sublimation d'un matériau solide décapant suivie d'une transformation chimique ; le dispositif (50) comprenant un contenant (6, 37) dans lequel est placé le matériau solide décapant (4), un moyen (10) apportant les calories permettant de sublimer le matériau solide décapant (4), et un moyen (40) permettant le contact entre la vapeur obtenue par sublimation d'un matériau solide décapant et/ou par sublimation d'un matériau solide décapant suivie d'une transformation chimique (4) et la poudre métallique (2).

2. Machine selon la revendication 1, comprenant un plateau sur lequel une pièce est réalisée par fabrication additive, dans laquelle le moyen (40) du dispositif (50) comprend une trémie (5, 23) sur laquelle repose la poudre métallique (2), ledit plateau constituant la trémie (5, 23) du dispositif (50).

3. Machine selon l'une des revendications 1 et 2, **caractérisé en ce que** le matériau solide décapant (4) est du NH₄F et **en ce qu'**il est porté à une température d'environ 200°C pour obtenir sa sublimation.

4. Machine selon l'une des revendications 1 et 2, **caractérisé en ce que** le matériau solide décapant (4) est du K₃AlF₆-KAlF₄ et **en ce qu'**il est porté à une température d'environ 400°C pour obtenir sa sublimation.

5. Machine selon l'une quelconque des revendications 1 à 4, **caractérisé en ce que** la vapeur obtenue par sublimation d'un matériau solide décapant et/ou par sublimation d'un matériau solide décapant suivie d'une transformation chimique est entrainée par un gaz porteur (7).

6. Machine selon l'une quelconque des revendications 1 à 5, **caractérisé en ce que** le gaz porteur (7) circulant entre les nodules (1) de la poudre métallique (2) et ladite poudre métallique (2) constituent un lit fluidisé.

7. Machine selon l'une quelconque des revendications 1 à 6, **caractérisé en ce que** le moyen (40) permettant le contact entre la vapeur obtenue par sublimation d'un matériau solide décapant et/ou par sublimation d'un matériau solide décapant suivie d'une transformation chimique et la poudre métallique (2) résulte de la liaison intime entre les nodules (3) de matériau solide décapant (4) avec les nodules (1) de la poudre métallique (2).

8. Machine selon l'une quelconque des revendications 1 à 6, **caractérisé en ce que** le moyen (40) permettant le contact entre la vapeur obtenue par sublimation d'un matériau solide décapant et/ou par sublimation d'un matériau solide décapant suivie d'une transformation chimique et la poudre métallique (2) est une trémie (23) sur laquelle repose la poudre métallique (2), ladite trémie (23) étant traversée par ladite vapeur.

9. Machine selon l'une quelconque des revendications 1 à 6, **caractérisé en ce que** le moyen (40) permettant le contact entre la vapeur obtenue par sublimation d'un matériau solide décapant et/ou par sublimation d'un matériau solide décapant suivie d'une transformation chimique (4) et la poudre métallique (2) est la tombée d'une pluie de poudre métallique (2) dans un courant ascendant de ladite vapeur.

10. Machine selon l'une quelconque des revendications 1 à 9, **caractérisé en ce que** le dispositif (50) comprend des moyens (45) permettant d'obtenir un lit fluidisé dans le contenant (6) par l'écoulement de la vapeur obtenue par sublimation d'un matériau solide décapant et/ou par sublimation d'un matériau solide décapant suivie d'une transformation chimique entre les nodules (1) de la poudre métallique (2).

11. Machine selon l'une quelconque des revendications 1 à 10, **caractérisé en ce qu'**il comprend un moyen pour collecter les gaz en sortie du contenant (6) afin d'en assurer le confinement et/ou le traitement pour neutraliser leurs composants polluants desdits gaz.

## Patentansprüche

1. Maschine zur additiven Fertigung, **dadurch gekennzeichnet, dass** sie eine Vorrichtung (50) enthält, die in situ ein Verfahren durchführt, welches ermöglicht, die auf der Oberfläche von Knötchen (1) eines Metallpulvers (2) vorhandenen Oxide vor der Verwendung desselben bei der additiven Fertigung durch Schmelzen des Metallpulvers (2) zu entfernen, und darin besteht, das Metallpulver zu dekapieren, indem dieses mit Dampf in Kontakt gebracht wird, der durch Sublimation eines ätzenden Feststoffs und/oder durch Sublimation eines ätzenden Feststoffs, gefolgt von einer chemischen Umwandlung, erhalten wurde; wobei die Vorrichtung (50) einen Behälter (6, 37), in dem der ätzende Feststoff (4) angeordnet ist, ein Mittel (10), das die Kalorien zuführt, die es ermöglichen, den ätzenden Feststoff (4) zu sublimieren, und ein Mittel (40), das den Kontakt zwischen dem durch Sublimation eines ätzenden Feststoffs und/oder durch Sublimation eines ätzenden Feststoffs (4), gefolgt von einer chemischen Umwandlung, erhaltenen Dampf und dem Metallpulver (2) ermöglicht, umfasst.

2. Maschine nach Anspruch 1, welche eine Platte umfasst, auf der ein Teil durch additive Fertigung hergestellt wird, wobei das Mittel (40) der Vorrichtung (50) einen Trichter (5, 23) umfasst, auf dem das Metallpulver (2) ruht, wobei die Platte den Trichter (5, 23) der Vorrichtung (50) bildet.

3. Maschine nach einem der Ansprüche 1 und 2, **dadurch gekennzeichnet, dass** der ätzende Feststoff (4) NH₄F ist, und dadurch, dass er auf eine Temperatur von ungefähr 200 °C gebracht wird, um seine Sublimation zu erreichen.

4. Maschine nach einem der Ansprüche 1 und 2, **dadurch gekennzeichnet, dass** der ätzende Feststoff (4) K₃AlF₆-KAlF₄ ist, und dadurch, dass er auf eine Temperatur von ungefähr 400 °C gebracht wird, um seine Sublimation zu erreichen.

5. Maschine nach einem der Ansprüche 1 bis 4, **dadurch gekennzeichnet, dass** der Dampf, der durch Sublimation eines ätzenden Feststoffs und/oder durch Sublimation eines ätzenden Feststoffs, gefolgt von einer chemischen Umwandlung, erhalten wurde, von einem Trägergas (7) mitgenommen wird.

6. Maschine nach einem der Ansprüche 1 bis 5, **dadurch gekennzeichnet, dass** das Trägergas (7), das zwischen den Knötchen (1) des Metallpulvers (2) strömt, und das Metallpulver (2) eine Wirbelschicht bilden.

7. Maschine nach einem der Ansprüche 1 bis 6, **dadurch gekennzeichnet, dass** das Mittel (40), das den Kontakt zwischen dem durch Sublimation eines ätzenden Feststoffs und/oder durch Sublimation eines ätzenden Feststoffs (4), gefolgt von einer chemischen Umwandlung, erhaltenen Dampf und dem Metallpulver (2) ermöglicht, aus der innigen Verbindung zwischen den Knötchen (3) von ätzendem Feststoff (4) mit den Knötchen (1) des Metallpulvers (2) resultiert.

8. Maschine nach einem der Ansprüche 1 bis 6, **dadurch gekennzeichnet, dass** das Mittel (40), das den Kontakt zwischen dem durch Sublimation eines ätzenden Feststoffs und/oder durch Sublimation eines ätzenden Feststoffs, gefolgt von einer chemischen Umwandlung, erhaltenen Dampf und dem Metallpulver (2) ermöglicht, ein Trichter (23) ist, auf dem das Metallpulver (2) ruht, wobei der Trichter (23) von dem Dampf durchströmt wird.

9. Maschine nach einem der Ansprüche 1 bis 6, **dadurch gekennzeichnet, dass** das Mittel (40), das den Kontakt zwischen dem durch Sublimation eines ätzenden Feststoffs und/oder durch Sublimation eines ätzenden Feststoffs, gefolgt von einer chemischen Umwandlung (4), erhaltenen Dampf und dem Metallpulver (2) ermöglicht, das Fallen eines Regens aus Metallpulver (2) in einen aufsteigenden Strom des Dampfes ist.

10. Maschine nach einem der Ansprüche 1 bis 9, **dadurch gekennzeichnet, dass** die Vorrichtung (50) Mittel (45) umfasst, die es ermöglichen, eine Wirbelschicht im Behälter (6) durch das Strömen des durch Sublimation eines ätzenden Feststoffs und/oder durch Sublimation eines ätzenden Feststoffs, gefolgt von einer chemischen Umwandlung, erhaltenen Dampfes zwischen den Knötchen (1) des Metallpulvers (2) zu erhalten.

11. Maschine nach einem der Ansprüche 1 bis 10, **dadurch gekennzeichnet, dass** sie ein Mittel zum Sammeln der Gase am Ausgang des Behälters (6) umfasst, um deren Einschließung und/oder die Behandlung zum Unschädlichmachen ihrer schädlichen Komponenten der Gase sicherzustellen.

## Claims

1. Additive manufacturing machine, **characterized in that** it contains a device (50) implementing *in situ* a process making it possible to remove the oxides present at the surface of nodules (1) of a metal powder (2) before the use of the latter in the additive manufacturing by melting of the metal powder (2), consisting in stripping said metal powder by bringing the latter into contact with vapour obtained by sublimation of a solid stripping material and/or by sublimation of a solid stripping material followed by a chemical conversion; the device (50) comprising a receptacle (6, 37) in which the solid stripping material (4) is placed, a means (10) supplying the heat making it possible to sublime the solid stripping material (4), and a means (40) which makes possible contact between the vapour obtained by sublimation of a solid stripping material and/or by sublimation of a solid stripping material followed by chemical conversion (4) and the metal powder (2).

2. Machine according to Claim 1, comprising a platform on which a part is produced by additive manufacturing, in which the means (40) of the device (50) comprises a distributor plate (5, 23) on which the metal powder (2) rests, said platform constituting the distributor plate (5, 23) of the device (50).

3. Machine according to either of Claims 1 and 2, **characterized in that** the solid stripping material (4) is NH₄F and **in that** it is brought to a temperature of approximately 200°C in order to cause it to sublime.

4. Machine according to either of Claims 1 and 2, **characterized in that** the solid stripping material (4) is K₃AlF₆-KAlF₄ and **in that** it is brought to a temperature of approximately 400°C in order to cause it to sublime.

5. Machine according to any one of Claims 1 to 4, **characterized in that** the vapour obtained by sublimation of a solid stripping material and/or by sublimation of a solid stripping material followed by a chemical conversion is entrained by a carrier gas (7).

6. Machine according to any one of Claims 1 to 5, **characterized in that** the carrier gas (7) circulating between the nodules (1) of the metal powder (2) and said metal powder (2) constitute a fluidized bed.

7. Machine according to any one of Claims 1 to 6, **characterized in that** the means (40) which makes possible contact between the vapour obtained by sublimation of a solid stripping material and/or by sublimation of a solid stripping material followed by a chemical conversion and the metal powder (2) results from the intimate connection between the nodules (3) of solid stripping material (4) with the nodules (1) of the metal powder (2).

8. Machine according to any one of Claims 1 to 6, **characterized in that** the means (40) which makes possible contact between the vapour obtained by sublimation of a solid stripping material and/or by sublimation of a solid stripping material followed by a chemical conversion and the metal powder (2) is a distributor plate (23) on which the metal powder (2) rests, said distributor plate (23) being traversed by said vapour.

9. Machine according to any one of Claims 1 to 6, **characterized in that** the means (40) which makes possible contact between the vapour obtained by sublimation of a solid stripping material and/or by sublimation of a solid stripping material followed by a chemical conversion (4) and the metal powder (2) is the falling of a rain of metal powder (2) into an ascending stream of said vapour.

10. Machine according to any one of Claims 1 to 9, **characterized in that** the device (50) comprises means (45) making it possible to obtain a fluidized bed in the receptacle (6) via the flow of the vapour obtained by sublimation of a solid stripping material and/or by sublimation of a solid stripping material followed by a chemical conversion between the nodules (1) of the metal powder (2).

11. Machine according to any one of Claims 1 to 10, **characterized in that** it comprises a means for collecting the outlet gases from the receptacle (6) in order to provide for the confinement and/or the treatment thereof in order to neutralize their polluting components of said gases.
